# EUROPÄISCHE PATENTSCHRIFT

(11) **EP 2 590 590 B1**
(45) Veröffentlichungstag und Bekanntmachung des Hinweises auf die Patenterteilung: **25.03.2015**
(21) Anmeldenummer: 11718670.0
(22) Anmeldetag: 12.04.2011
(51) Int. Cl.: A61C 1/00, A61C 1/08, A61B 18/20

(54) **SYSTEM ZUR MATERIALABTRAGUNG IM MUNDRAUM**
SYSTEM FOR ABLATING MATERIAL IN THE ORAL CAVITY
SYSTÈME POUR L'ENLÈVEMENT DE MATIÈRE DANS LA CAVITÉ BUCCALE

(30) Priorität: 06.07.2010 DE 102010026288
(43) Veröffentlichungstag der Anmeldung: 15.05.2013
(73) Patentinhaber: Jo, Yong-Min, 40227 Düsseldorf (DE)
(72) Erfinder: Jo, Yong-Min, 40227 Düsseldorf (DE)
(74) Vertreter: Michalski Hüttermann & Partner Patentanwälte mbB
(86) Internationale Anmeldenummer: PCT/EP2011/055742
(87) Internationale Veröffentlichungsnummer: WO 2012/004018

(56) Entgegenhaltungen:
- EP-A2- 0 780 097
- WO-A1-89/01317
- WO-A2-2009/106272

## Beschreibung

### Technisches Gebiet

Die vorliegende Anmeldung betrifft ein System zum Abtragen von festem Material im Mundraum eines Patienten.

### Stand der Technik

Im Mundraum eines Patienten werden üblicherweise Abtragungen von festem Material (Knochenmaterial, Zahnmaterial, alte Füllungen oder Zahnfleisch) durch Bohren vorgenommen. Neuerdings ist es auch möglich, solche Abtragungen durch Nadeln oder Laser durchzuführen, siehe WO-A-2009 106272 und EP-A-0780097.

Nadeln werden dabei lediglich eingesetzt, um kleinste Löcher im Kiefer anzubringen, um die Bewegung von Zähnen zu beeinflussen.

Laserstrahlung wird bspw. eingesetzt, um Zahnfleisch vom Kieferknochen zu entfernen, bevor Löcher in den Kieferknochen gebohrt werden. Solche Bohrungen sind bspw. beim Einbringen von Implantaten üblich.

Sollen solche Bohrungen eingebracht werden, ist es bekannt, zuvor eine Schablone zu fertigen, die als eine Art Zahnschiene ausgeführt ist und die Position für die zuvor am Computer anhand von Röntgen- oder CT-Aufnahmen geplanten Bohrungen anzuzeigen. Dazu weisen solche Zahnschienen, meist gefertigt aus Kunststoff, in der Regel metallverstärkte Öffnungen auf, durch die die Bohrer eingeführt werden können.

Bevor jedoch gebohrt werden kann, ist das Zahnfleisch an den entsprechenden Stellen zu entfernen.

### Darstellung der Erfindung

Aufgabe der vorliegenden Erfindung ist es, ein System anzugeben, mit dem in wenigen Arbeitsschritten und auf besonders präzise und zuverlässige Art und Weise Abtragungen von festem Material im Mundraum vorgenommen werden können.

Gelöst wird diese Aufgabe durch ein System gemäß Anspruch 1. Die abhängigen Unteransprüche 2 bis 12 geben vorteilhafte Ausführungen an.

Ein erfindungsgemäßes System zum Abtragen von festem Material im Mundraum eines Menschen oder Tieres umfasst eine Festlegestruktur und eine Einbringungsvorrichtung. Dabei weist die Einbringungsvorrichtung mindestens ein Mittel zum Abtragen von festem Material auf. Bei abzutragendem festem Material kann es sich bspw. um Kieferknochen, Zahnmaterial, in den Zähnen eingebrachtes Füllungsmaterial oder Zahnfleisch handeln. So können beispielsweise Abtragungen zur späteren Einbringung von Implantaten, Zahnfüllungen oder Inlays, für die Befestigung von Kronen, für eine Zahnbewegung, beispielsweise im Rahmen einer Rapid Orthodontic Tooth Movement Therapie vorgenommen werden.

Als Mittel zum berührungslosen Abtragen kommen hier insbesondere Laserstrahlen bzw. Laser, die solche erzeugen können, in Frage. Prinzipiell sind jedoch auch andere Verfahren denkbar, mit denen solches Material abgetragen werden kann. Denkbar ist hier bspw. die Anwendung von Ultraschall, starken Funkwellen oder andere. Als nicht-berührungsloses Verfahren wäre beispielsweise klassisches Bohren zu nennen.

Die Festlegestruktur ist erfindungsgemäß so ausgelegt, dass sie an einem menschlichen oder tierischen Kopf, insbesondere an einem Kiefer, bspw. am Kieferknochen und/oder Zähnen festlegbar ist. In Frage kommen hier bspw. Zahnschienen oder Ähnliches.

Die Festlegevorrichtung weist ein erstes Verbindungsmittel auf, die Einbringungsvorrichtung ein entsprechendes zweites Verbindungsmittel, wobei die Verbindungsmittel so eingerichtet sind, dass das zweite Verbindungsmittel steif mit der Festlegevorrichtung verbindbar ist. Des Weiteren sind die Festlegevorrichtung und die Einbringungsvorrichtung so ausgebildet, dass das zweite Verbindungsmittel nach dem steifen Verbinden mit der an dem Kopf festgelegten Festlegestruktur eine relativ zu einem Kieferknochen oder einem Zahn des Menschen oder Tieres fixierte Lage aufweist. Dies bedeutet, dass die Verbindungsmittel bzw. die Festlegestruktur und die Einbringungsstruktur so auszulegen sind, dass die Festlegestruktur relativ zu einem Kieferknochen oder einem Zahn in eine fixierte Lage gebracht werden kann. Dies ist bspw. möglich, indem das erste Verbindungsmittel mit der Festlegevorrichtung fest und steif verbunden ist und das zweite Verbindungsmittel steif mit der Einbringungsvorrichtung verbunden ist und die Verbindungsmittel so eingerichtet sind, dass sie beim Verbinden miteinander steif verbunden werden können. Hier sind bspw. Rastmittel, Klemmungen, Schieberiegel und/oder magnetische Ausrichtmittel vorstellbar. Eine steife Verbindung muss nicht zwangsläufig fest sein. Ausreichend ist eine Verbindung, wenn sie beispielsweise beim Andrücken von unten nach oben bezüglich der Ausrichtung in der zur Druckrichtung senkrechten Ebene fix ist. Dies kann beispielsweise durch Nuten und entsprechende Vorsprünge realisiert werden. Vorteilhafterweise werden jedoch Verriegelungs- und/oder Fixiermittel derart vorgesehen, dass die Verbindung nicht nur steif sondern auch derart fest ist, dass sie ohne Betätigung von vorzusehenden Lösemitteln, wie beispielsweise dem Zurückziehen eines Riegels, nicht verändert werden kann.

Durch ein solches System wird eine fixierte Lage der Einbringungsvorrichtung erreicht. Dadurch kann die Einbringungsvorrichtung das mindestens eine Mittel zum Abtragen gezielt an bestimmter Stelle applizieren.

Dies ermöglicht ein genaueres Arbeiten, das bspw. nicht mehr auf das durch einen Arzt optisch geleitete Applizieren eines Abtragemittels angewiesen ist. Auch ist es bspw. unabhängig von möglicherweise zitternden Handbewegungen o.ä.. Somit kann das System ein geplantes Abtragen deutlich genauer durchführen. Dadurch wird bspw. die Festigkeit von Implantaten erhöht und die Menge des bei einer einzubringenden Füllung abzutragenden Materials deutlich verringert.

Ein solches System kann derart verwendet werden, dass zunächst die Festlegevorrichtung am Kopf des Patienten, insbesondere am Kiefer des Patienten, festgelegt wird und sodann die Einbringungsvorrichtung über die Verbindungsmittel daran fixiert wird. Im Anschluss daran kann die Abtragung durchgeführt werden.

Mit Vorteil ist die Einbringungsvorrichtung so eingerichtet, dass die Einbringungsvorrichtung oder ein direkt an das zweite Verbindungsmittel angrenzender Endabschnitt der Einbringungsvorrichtung so mit dem zweiten Verbindungsmittel verbunden ist, dass die Einbringungsvorrichtung beziehungsweise der Endabschnitt in Richtung Abtragung einen nicht variablen Abstand zur Struktur, in der die Abtragung durchgeführt wird, aufweist. Die Richtung der Abtragung ist dabei die mittlere Einfallsrichtung der berührungslosen Abtragungsmittel. Bei der Einbringung eines Lochs wäre somit die Einbringungsvorrichtung beziehungsweise der Endabschnitt in der Einbringungsrichtung des Lochs, also in Richtung dessen Längsachse, nicht beweglich.

Mit Vorteil ist die Einbringungsvorrichtung beziehungsweise der Endabschnitt lediglich um die Richtung der Abtragung, insbesondere die Längsachse des Lochs, also um die Einbringungsrichtung des Lochs, drehbar und ansonsten steif mit dem zweiten Verbindungsmittel verbunden. Dann sind mit Vorteil Lagebestimmungsmittel zur Bestimmung der genauen Rotationslage vorgesehen. Bei einer anderen Ausführungsform kann der Endabschnitt vollständig steif mit dem zweiten Verbindungsmittel verbunden sein. Dann sind keine Lagebestimmungsmittel vorgesehen.

Mit Vorteil weist der Endabschnitt mindestens ein Umlenkmittel zum Umlenken der Mittel zum berührungslosen Abtragen auf. Dabei wird eine Umlenkung um 60 bis 120°, insbesondere von 90°, bevorzugt. Das Umlenkmittel ist dabei vorteilhafterweise auf einer Achse durch die Richtung der Abtragung positioniert.

Durch ein solches Umlenkmittel kann eine Einbringungsvorrichtung geschaffen werden, die im Mundraum mit seinem beschränkten Platzangebot, insbesondere senkrecht zu den Kauflächen, besonders leicht zu positionieren ist.

Vorteilhafterweise ist die fixierte Lage gemäß Anspruch 2 eine durch die Festlegevorrichtung und die Verbindungsmittel vorbestimmte Lage.

Bei einer solchen Ausbildung kann bspw. zunächst ein CT- oder eine andere bildliche Darstellung der im Mundraum befindlichen Situation oder eines Teils davon gewonnen werden (z. B. durch interorale Scanner oder ähnliches) und bspw. am Computer eine Planung der Abtragung durchgeführt werden. Sodann kann bspw. durch "Rapid Prototyping" eine Festlegestruktur hergestellt werden. Diese kann dabei auf die in dem Mundraum anzutreffenden Formen angepasst sein und ein erstes Verbindungsmittel an einer vorbestimmten Position und ausgerichtet in eine vorbestimmte Richtung aufweisen, so dass daran die Einbringungsvorrichtung über die Verbindungsmittel an der Festlegevorrichtung befestigt werden kann und mit Hilfe der Mittel zum Abtragen nun eine Abtragung durchgeführt werden kann, die der zuvor geplanten Abtragung weitestgehend entspricht. So ist bspw. möglich, ein entsprechendes Computer-Programm zu schaffen, dass vom Mundraum gemachte Aufnahmen darstellt und eine Planung der Abtragung erlaubt. Es könnte des Weiteren dazu eingerichtet sein, über entsprechende Mittel eine Festlegevorrichtung herzustellen, die so eingerichtet ist, dass im Anschluss daran und Festlegen der Festlegevorrichtung und Verbinden der Einbringungsvorrichtung mit der Festlegevorrichtung eine automatische Abtragung durchgeführt werden kann, die der vorher geplanten weitestgehend genau entspricht.

Alternativ zu einer solchen vorbestimmten fixierten Lage wäre es denkbar, dass die Festlegevorrichtung und/oder die Einbringungsvorrichtung mindestens ein Lagebestimmungsmittel zur Bestimmung der fixierten Lage aufweisen. Dabei wird eine solche Lagebestimmung vorteilhafterweise gegenüber der Festlegevorrichtung durchgeführt. Wenn dann die Festlegevorrichtung eine vordefinierte Lage relativ zum Kiefer bzw. Zähnen aufweist, so kann über das Lagebestimmungsmittel die Lage der Einbringungsvorrichtung gegenüber der Kieferstruktur bzw. der Zähne ermittelt werden. Dies ist bspw. in der Form denkbar, dass die Verbindungsmittel eine Festlegung schaffen, die eine Rotation um eine Achse ermöglicht. Dies ist bspw. vorteilhaft, um eine Einbringungsvorrichtung möglichst frei im Mundraum platzieren zu können.

Die entsprechende Verfahrensweise würde dann den vor dem Abtragen durchzuführenden Schritt der Bestimmung der Lage der Einbringungsvorrichtung aufweisen.

Vorteilhafterweise wird als Festlegevorrichtung eine Zahn- und/oder Kieferschiene zum formschlüssigen Aufklemmen auf einen Kieferabschnitt und/oder Zähne und/oder Implantate verwendet. Dies bietet eine besonders einfache und zuverlässige Möglichkeit der Festlegung.

Besonders vorteilhaft wird als Mittel zum Abtragen ein gepulster Laser oder ein Lichtleiter verbunden mit einem gepulsten Laser verwendet.

Gepulste Laser sind besonders geeignet, eine schonende Abtragung durchzuführen. Dabei ist die Einbringungsvorrichtung so eingerichtet, dass sie einen Laserstrahl zum Abtragen von festem Material im Mundraum verwendet. Das Verwenden gepulster Laser ist besonders vorteilhaft, da damit eine Karbonifizierung einer Kieferknochenstruktur verhindert werden kann und der Wärmeeintrag vergleichsweise gering gehalten werden kann.

Mit Vorteil sind die Verbindungsmittel so gewählt, dass die Verbindung wasserdicht ist. So können über den Speichel keine Keime aus dem Mundraum eindringen.

Mit besonderem Vorteil sind die Verbindungsmittel so gewählt, dass keine Partikel oder Flüssigkeiten in die Einbringungsvorrichtung eintreten können. Damit kann die Einbringungsvorrichtung auf einfache Art für verschiedene Patienten verwendet werden. Dazu müsste sie dann nur von außen desinfiziert bzw. mit einem auswechselbaren Überzug versehen sein.

Dabei muss das berührungslose Abtragungsmittel, beispielsweise ein Laser, nicht unbedingt im Mundraum positioniert werden. Vielmehr kann es entfernt positioniert und über ein Transportmittel, beispielsweise einen Lichtleiter, in den Mundraum geführt werden.

Mit besonderem Vorteil weist die Einbringungsvorrichtung, insbesondere bei der Verwendung eines gepulsten Lasers als Abtragungsmittel, einen Scanner auf. Ein Scanner ist zur Steuerung beziehungsweise Ablenkung und insbesondere zum rasternden Bewegen des Abtragungsmittels beziehungsweise des Wirkungs- und/oder Auftrefforts des Abtragungsmittels im Allgemeinen vorteilhaft.

Ein solcher Scanner beinhaltet insbesondere mindestens eine Bewegungsvorrichtung, an der insbesondere ein Scannerspiegel befestigt ist. Durch gezielte Ansteuerung der Bewegungsvorrichtung kann beispielsweise ein Laserstrahl steuerbar abgelenkt werden.

Um die Information über die fixierte Lage weiterhin nutzen zu können, um beispielsweise den Laserstrahl gezielt an einen geplanten Ort lenken zu können, ist die Bewegungsvorrichtung vorteilhafterweise mit dem zweiten Verbindungsmittel steif verbunden. Alternativ kann der Scanner auch ohne eine solche steife Verbindung angeordnet werden. Dann kann zur Erhaltung der Information beispielsweise mindestens ein Sensor zur Erfassung der Änderung und/oder Lage und/oder Ausrichtung vorgesehen sein. Alternativ oder zusätzlich können Mittel vorgesehen sein, die auch bei Änderungen der Lage und/oder Ausrichtung ein identischen Auftreffort beziehungsweise Wirkungsort gewährleisten. Dies ist beispielsweise durch spezielle, mit den bewegten und/oder unbewegten Teilen gekoppelte Optiken möglich. Auch kann dies durch Verwendung von Lichtleitern an den bewegten Teile und/oder Gelenken und/oder Verstellorten gewährleistet werden, wenn beispielsweise die Richtung der Einkopplung in den Lichtleiter durch den Scanner verändert wird.

Besonders vorteilhaft ist der Einsatz von mehreren, insbesondere zwei Bewegungsvorrichtungen mit jeweils einem Scannerspiegel, da dann der Laserstrahl in verschiedenen Ebenen abgelenkt werden kann. Durch eine solche Ablenkung ist es möglich, den Laserstrahl gezielt an verschiedene Punkte zu steuern und nur sehr lokal Abtragungen vorzunehmen. Dadurch kann ein Wärmeeintrag reduziert werden und eine besonders planungsgerechte Abtragung durchgeführt werden. Soll bspw. ein Loch erzeugt werden, kann der Laserstrahl dann in verschiedenen Mustern über die Fläche, an der ein Loch entstehen soll, geführt werden. Dadurch können sich die Stellen, an denen der Laser gerade nicht einstrahlt, in der Zwischenzeit wieder abkühlen. Auch kann dadurch eine besonders senkrechte Lochform erzeugt werden. Auch kann der Lochgrundriss im Gegensatz zu üblichen Verfahren mit Bohrern auch in beinahe beliebiger Geometrie, beispielsweise sechseckig, ausgeführt werden. Ein entsprechendes Verfahren würde somit im Rahmen der Abtragung die Verfahrensschritte umfassen, den gepulsten Laser einzuschalten und über die Steuerung der Bewegungsvorrichtungen den Laserstrahl so zu lenken, dass eine Abtragung an den gewünschten Positionen durchgeführt wird, so dass am Ende die geplante Abtragung realisiert wird.

Besonders vorteilhaft kann die Einbringungsvorrichtung einen mit dem zweiten Verbindungsstück, insbesondere steif, verbundenen Endabschnitt aufweisen. In einem solchen Endabschnitt ist ein mit diesem fest verbundener Umlenkspiegel angeordnet. Der Endabschnitt wiederum ist mit dem Scanner steif verbunden. Mit dem Scanner steif verbunden ist ein Einkopplungsabschnitt zum Einkoppeln von Laserpulsen, der insbesondere beweglich mit dem Scanner verbunden ist. So kann über den Einkopplungsabschnitt ein Laserpuls in den Scanner eingekoppelt, durch die Scannerspiegel entsprechend abgelenkt und über den festen Umlenkspiegel sodann an den vorbestimmten Ort geleitet werden. Die Verwendung eines solchen Umlenkspiegels in einem Endabschnitt zusätzlich zu einem Scanner ermöglicht es, den Scanner etwas weiter entfernt von den Verbindungsmitteln und zur Locherstreckung abgewinkelt anzuordnen, was eine flachere Bauweise und so mit eine angenehmere Anwendung in der Mundhöhle ermöglicht.

Besonders bevorzugt wird ein solches System zum Einbringen mindestens eines, insbesondere im Querschnitt eckigen, Lochs in einen Kiefer ausgebildet bzw. verwendet. Eine solche Ausbildung kann sich durch ein entsprechendes Computersystem zur Planung und Durchführung, das Abtragungsmittel, beispielsweise die Laserenergie oder -pulsform, die Art des Scanners oder die Verbindungsmittel auszeichnen. Eckige Löcher sind besonders vorteilhaft, da dadurch ein besonders guter Halt, bspw. von Implantaten erzielt werden kann. Somit ist ein System mit besonderem Vorteil ausgebildet, eine Befestigungsstruktur für ein Implantat in einen Kieferknochen einzubringen. Eine entsprechende Verwendung hebt die Vorteile dieses Systems besonders deutlich hervor.

Alternativ kann ein solches System mit Vorteil zum Einbringen eines Lochs oder einer Ausnehmung in einem Zahn, ausgebildet sein bzw. dazu verwendet werden. Eine solche Ausbildung kann ein entsprechendes Computersystem zur Planung und Durchführung, das Abtragungsmittel, beispielsweise die Laserenergie oder -pulsform, die Art des Scanners oder die Verbindungsmittel charakterisiert sein. Mit einem solchen System lassen sich besonders genaue Löcher oder Ausnehmungen einbringen, so dass der Halt einer möglicherweise einzubringenden Füllung sehr hoch sein und die Menge des abzutragenden Materials sehr gering ausfallen wird.

So ist beispielsweise bei tiefen Löchern ein aufwendigerer Scanner erforderlich als bei der Entfernung von oberflächlichen und kariösen Stellen eines Zahnes.

Alternativ kann ein solches System auch mit Vorteil zum Abtragen von Kieferknochen im direkten Umfeld eines Zahns zur Beeinflussung der Bewegung eines Zahns im Kiefer bei einer Zahnfehlstellungskorrektur ausgebildet sein bzw. dazu verwendet werden. Dies kann beispielsweise im Rahmen einer Rapid Orthodontic Tooth Movement Therapie erfolgen. Eine solche Ausbildung kann ein entsprechendes Computersystem zur Planung und Durchführung, das Abtragungsmittel, beispielsweise die Laserenergie oder -pulsform, die Art des Scanners oder die Verbindungsmittel charakterisiert sein. Im Gegensatz zur der Entfernung von oberflächlichen und kariösen Stellen eines Zahnes, bei dem die Abtragungsmittel in der Regel von oben auf einen Zahn gerichtet sein können, müssen der Scanner und/oder die Verbindungsmittel bei einer derartigen Anwendung so eingerichtet sein, dass die das Abtragungsmittel direkt an den an den Zahn angrenzenden Kieferbereich, häufig also in den Zahnzwischenraum leiten können.

Mit Vorteil sind die Systeme mit entsprechender Steuerungssoft- und hardware verbunden, die im Idealfall auch eine Planung des Eingriffs ermöglichen bzw. entsprechende Schnittstellen aufweisen.

Die Einbringungsvorrichtung beinhaltet ferner eine Entfernungsmessvorrichtung. Durch eine solche Entfernungsmessvorrichtung kann bspw. der Abstand zum abzutragenden Material bestimmt werden. Dadurch kann der Erfolg der Abtragung bzw. die Tiefe oder auch Form der Abtragung ermittelt werden. Dies ermöglicht eine noch genauere Durchführung der Abtragung, da ein entsprechendes Feedback möglich ist.

Eine solche Entfernungsmessung kann bspw. durch Triangulationsmittel zur Durchführung einer Entfernungsmessung mittels Laser-Triangulation ausgebildet sein. Dabei kann insbesondere ein lenkbarer Laserstrahl, der auch zur Abtragung verwendet wird, jedoch mit ggf. geringerer Intensität verwendet werden und die durchgeführte Abtragung bzw. die Form des am Abtragungsortes befindlichen Materials bestimmt werden.

Alternativ oder zusätzlich kann eine solche Entfernungsmessvorrichtung Mittel zur Erfassung eines Ablationsknalls aufweisen. Dazu eignet sich bspw. ein Mikrofon. Wird bspw. mit Hilfe eines Laserstrahls Material abgetragen, werden ein Plasma und ein Ablationsknall erzeugt. Dieser Ablationsknall kann detektiert werden. Dies ist auf verschiedene Arten möglich. Eine derartige Entfernungsmessung hat den Vorteil, dass sie gleichzeitig mit der Abtragung durchgeführt werden. Auch dadurch ist eine Vermessung der Lochgeometrie bzw. der Form der Abtragung bzw. des Materials, das sich am Abtragungsort befindet, möglich. Sie bietet gegenüber der Lasertriangulation bspw. den Vorteil, dass sie auch bei vergleichsweise viel Dampf oder Partikel im Abtragungsbereich verhältnismäßig genaue Ergebnisse liefert.

Eine solche Messung kann durch die Bestimmung der Laufzeit der Schallwellen des Ablationsknalls erfolgen, die sodann auf Basis der Schallgeschwindigkeit im zwischen Abtragungsort und Mikrofon in eine Entfernung zwischen Entstehungsort (Abtragungsort) und aufnehmenden Mikrofon umgerechnet werden kann. Dabei kann als Startpunkt der Zeitmessung beispielsweise die Erzeugung des Abtragungsmittels, beispielsweise des Laserpulses, oder die Passage des Abtragungsmittels, beispielsweise des Laserpulses, durch die Einbringungsvorrichtung verwendet werden, da beispielsweise die Laufzeit eines Laserstrahls in der Regel vernachlässigt werden kann. So kann beispielsweise eine durch eine zwischen zwei Messungen durchgeführte Abtragung hervorgerufene Tiefenänderung vermessen werden. Dabei wird vorausgesetzt, dass sich die Lage der Einbringungsvorrichtung oder zumindest der Mikrofone zwischenzeitlich zumindest bezüglich der Entfernung zur Struktur, in der die Abtragung durchgeführt wird, nicht verändert hat. Die ist durch eine oben beschriebene Ausbildung der Einbringungsvorrichtung und/oder durch steife Verbindung der Mikrofone mit dem zweiten Verbindungsmittel zu erreichen. Auch ist es möglich, mit Beginn der Abtragung die Entfernung zur abzutragenden Struktur zu ermitteln.

Alternativ kann bei Verwendung von mindestens zwei zum Abtragungsort asymmetrisch angeordneten oder mindestens drei Mikrofonen eine Entfernungsbestimmung auch ohne Kenntnis über den Erzeugungszeitpunkt erfolgen. Dabei kann durch Berechnung auf Basis der einzelnen Laufzeiten, insbesondere unter Verwendung der Kenntnis über die Einfallsrichtung des Abtragungsmittels, eine Entfernung auf bekannte und einfache Weise durch Trilateration bestimmt werden.

Durch Verwendung von mindestens zwei Mikrofonen kann durch Berechnung aus den Laufzeiten zu den mindestens zwei beziehungsweise drei Mikrofonen auch eine Kontrolle der Steuerung des Laserstrahls erfolgen. Denn durch eine einfache Berechnung auf Basis der Laufzeiten kann der Ort der Entstehung berechnet werden.

Darüber hinaus kann durch die Detektion des Ablationsknall auf weitere Eigenschaften des abtragenden Materials bzw. des Materials im Umfeld der Abtragung geschlossen werden. So kann bspw. die noch vorhandene Materialmenge grob bestimmt werden oder auch Festigkeit des abgetragenen Materials ermittelt werden. Dadurch lässt sich eine besonders gute Steuerung der Abtragung realisieren.

Durch die Detektion des Ablationsknalls lässt sich bei einem Einsatz eines Lasers als Mittel zur Abtragung die erforderliche Laser bzw. Pulsenergie bestimmen. Diese kann je nach Kieferknochen oder abzutragender Substanz unterschiedlich ausfallen. So kann bspw. die Laserenergie langsam gesteigert werden, bis ein Ablationsknall detektiert wird. Dadurch lässt sich die erforderliche Laserenergie besonders genau einstellen und auf die einzelnen Punkte der Abtragung anpassen und dadurch ein besonders schonendes Abtragen erreicht bzw. der Wärmeeintrag minimiert werden.

Mit Vorteil weist die Einbringungsvorrichtung, wenn sie als Mittel zum Abtragen einen gepulsten Laser oder einen Lichtleiter verbunden mit einem gepulsten Laser nach Anspruch 6 aufweist, und Mittel zur Erfassung des Ablationsknalls umfasst, auch Mittel zur Detektion der Zeitverzögerung zwischen dem Erzeugen oder der Passage eines Laserpulses durch die Einbringungsvorrichtung und der Erfassung des Ablationsknalls auf. Dadurch lässt sich eine Entfernungsmessung besonders zuverlässig und genau realisieren. Die Laufzeit des Laserstrahls kann dabei in der Regel vernachlässigt werden.

Mit Vorteil wird eine Fokussierungseinrichtung, insbesondere im, am oder angrenzend an die Einbringungsvorrichtung, vorgesehen. Mit einer solchen Fokussierungseinrichtung, die insbesondere zwei oder mehr Linsen umfasst, kann der Laserstrahl, insbesondere an dem Ort der vorzunehmenden Abtragung, fokussiert werden. Mit Vorteil ist die Fokussierungseinrichtung so eingerichtet, dass der Fokus verschiebbar ist und insbesondere im Lauf der Abtragung nachgeführt werden kann. Dies ist insbesondere bei tiefen Abtragungen vorteilhaft, damit die volle Intensität des Abtragungsmittels immer fokussiert am Abtragungsort zur Verfügung steht. Dabei kann sich die Nachführung an einer geplanten, berechneten, und/oder gemessenen schon erfolgten Abtragung und/oder an der Tiefe des geplanten, berechneten und/oder gemessenen Abtragungsortes orientieren.

Mit Vorteil können in beziehungsweise an der Festlegevorrichtung Vorrichtungen zum Kühlen, insbesondere zum Einbringen und gegebenenfalls Absaugen von Kühlmittel beinhalten. Dazu kann beispielsweise eine Kühlmittelzuführung, insbesondere mit einer Düse zum gezielten Einbringen des Kühlmittels, vorgesehen sein. Als Kühlmittel kommt beispielsweise gekühltes Wasser oder Eiswasser in Frage. Optimalerweise wird Kühlmittel gewählt, dass einen Laserstrahl möglichst unbeeinflusst passieren lässt. Zum Absaugen kann ein Absaugkanal vorgesehen sein. An einen solchen können beispielsweise beim Zahnarzt vorhandene übliche Absaugmittel angeschlossen werden. Es ist jedoch auch denkbar, Kühlmittel vorzusehen, dass beispielsweise verdampft und somit selbsttätig aus einer entsprechenden Öffnung wieder austreten kann und/oder durch den Kühlmittelfluss herausgetragen wird.

Denkbar ist es auch, die Vorrichtungen zum Kühlen am Einbringungsstück vorzusehen.

Ein entsprechendes Verfahren würde somit die Schritte umfassen:
a. Bereitstellen oder Herstellen einer Befestigungsvorrichtung, insbesondere aufgrund von Bildmaterial des Mundraums,
b. Festlegen der Festlegevorrichtung am Kopf, insbesondere am Kiefer oder an Zähnen,
c. Verbinden der Einbringungsvorrichtung mit der Festlegevorrichtung über die Verbindungsmittel,
d. Anwenden der Abtragungsmittel zur Abtragung des Materials.

Vorteilhafterweise wird dabei zuvor eine Planung der Abtragung durchgeführt. Besonders vorteilhaft wird die Abtragung durch ein scannendes Verfahren realisiert, bei dem die Abtragung immer nur an kleinen Punkten durchgeführt und so nach und nach die geplante oder gewünschte Abtragung erzielt wird. Mit besonderem Vorteil werden Entfernungsmessungen vorgenommen, um die Abtragung zu optimieren, bspw. um bezüglich der Energie oder des Fokusses eine genauere Steuerung der Abtragung zu erreichen und/oder bspw. einen Vergleich der erwarteten Abtragung mit der erzielten Abtragung durchzuführen und dementsprechend die Abtragung anzupassen. Mit besonderem Vorteil werden aufgrund der Auswertung des Ablationsknalls weitere Daten erhoben, die ebenfalls zur Optimierung der Abtragung verwendet werden.

### Kurze Beschreibung der Zeichnungen

Weitere vorteilhafte Ausführungsbeispiele sowie weitere Vorteile der Erfindung sollen anhand von schematischen Skizzen beschrieben werden.

Dabei zeigen die Figuren im Einzelnen:
Figur 1 eine schematische Übersicht über die Anwendung des Systems im Mundraum;
Figur 2 eine schematische Übersicht über ein erfindungsgemäßes System;
Figur 3 eine schematische Darstellung der Funktionsweise des erfindungsgemäßen Systems;
Figur 4 eine schematische Darstellung wie in Figur 3, jedoch mit Kühlung; und
Figur 5 eine schematische Darstellung einer Entfernungsmessung;
Figur 6 eine schematische Übersicht über ein zweites erfindungsgemäßes System und
Figur 7 eine schematische Übersicht über ein drittes erfindungsgemäßes System

### Weg(e) zur Ausführung der Erfindung

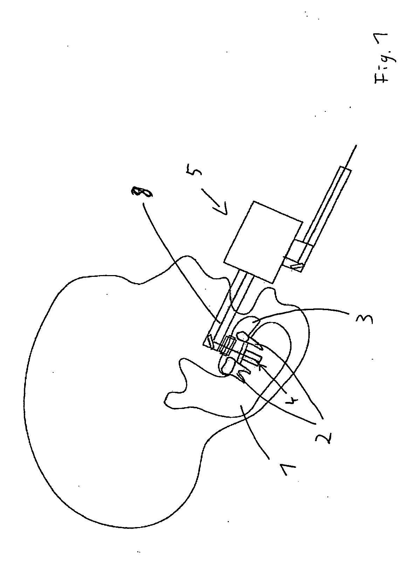

Figur 1 zeigt einen menschlichen Kopf mit einem Kiefer 1. In Figur 1 befinden sich zwei dargestellte Zähne 2. Des Weiteren ist ein Loch 4 gezeigt, auf dessen Grund ein Lasterstrahl 8 gerichtet ist. Er wird unter Verwendung eines Handstücks 5 eingebracht. Das Handstück 5 kann dabei durch einen Arzt bzw. Anwender gehalten werden. Gehalten bedeutet nur, dass dessen Gewicht durch den Arzt gehalten wird. Die genaue Ausrichtung des Handstücks 5, oder zumindest die eines Endabschnitts, wird durch eine Zahnschiene 3 und die Verbindungsmittel bestimmt. Durch den Laserstrahl 8 wird das Loch 4 durch Abtragung von Kieferknochen erzeugt. Eine Zahnschiene 3 ist auf diese zwei Zähne 2 aufgesetzt und dient zur Befestigung bzw. Ausrichtung des Handstücks 5.

Durch ein solches System kann gezielt ein Loch 4 erzeugt werden.

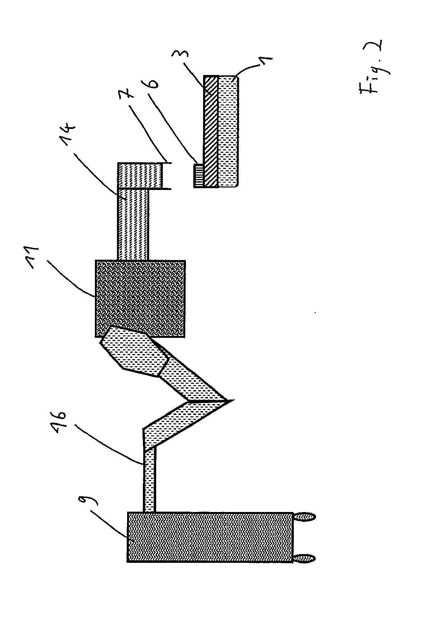

Figur 2 zeigt eine schematische Darstellung eines erfindungsgemäßen Systems, wobei die Zahnschiene 3 auf einen nicht zum System gehörenden Kiefer 1 aufgesetzt ist. Zu erkennen ist ein erstes Verbindungsmittel 6, das mit der Zahnschiene 3 fest und steif verbunden ist. Ein zweites Verbindungsmittel 7 ist mit dem Endabschnitt 14 fest und steif verbunden. Dieser ist wiederum mit dem Scanner 11 fest und steif verbunden. Der Scanner 11 ist jedoch beweglich mit einem Einkopplungsabschnitt 16 verbunden, der in einen Laser 9 mündet. Der Laser 9 ist in diesem Beispiel in einem großen fahrbaren Gehäuse angeordnet und koppelt seine Laserpulse in den in sich mehrfach beweglichen Einkopplungsabschnitt 16 ein, der den Laserstrahl führt. Tritt der Laserstrahl aus dem Einkopplungsabschnitt 16 aus und in den Scanner 11 ein, kann er dort abgelenkt werden. Sodann tritt der Laserstrahl in einen Endabschnitt 14 ein, in dem er in Richtung Kiefer 1 umgelenkt wird. Dort kann er Kiefermaterial abtragen.

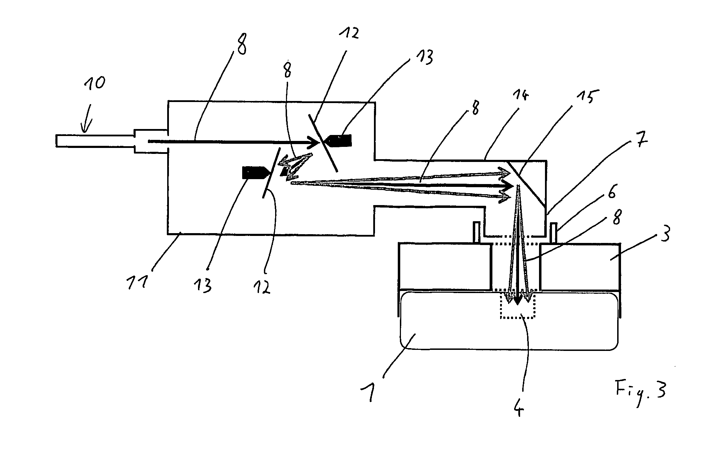

Figur 3 zeigt einen Querschnitt durch ein erfindungsgemäßes System. Des Weiteren gezeigt ist ein Kiefer 1. Auf den Kiefer 1 aufgesetzt ist eine Zahnschiene 3, die dort über einen formschlüssigen Sitz befestigt ist. Die Zahnschiene 3 weist ein erstes Verbindungsmittel 6 auf, das mit einem zweiten Verbindungsmittel 7 zusammenwirkt. Mit dem zweiten Verbindungsmittel 7 fest verbunden sind ein Endabschnitt 14 und ein Scanner 11. Zum Einkoppeln eines Laserstrahls 8 weist der Scanner 11 einen Lichtleiter 10 auf, in den ein in einem Laser erzeugter gepulster Laserpuls als Laserstrahl 8 in den Scanner 11 eingekoppelt wird. Im Scanner 11 befinden sich zwei Scannerspiegel 12, jeweils befestigt auf einer Bewegungsvorrichtung 13. Diese Bewegungsvorrichtung 13 ist computergesteuert und ermöglicht es, den Laserstrahl 8, in verschiedenen Richtungen und Ebenen abzulenken. Dies ist durch die mehreren, in unterschiedlichen Graustufen gezeigten Laserstrahlen 8 angedeutet. Die so abgelenkten Laserstrahlen 8 treffen sodann im Endabschnitt 14 auf den fest angeordneten Umlenkspiegel 15 und werden dadurch in Richtung Kiefer 2 umgelenkt. So tragen sie Kiefermaterial ab und schaffen das Loch 4.

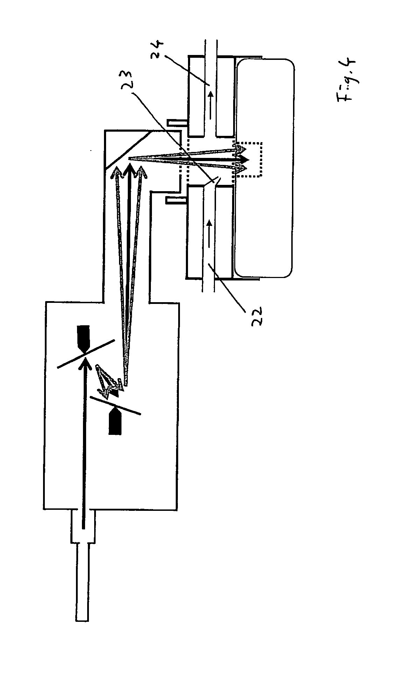

Figur 4 zeigt die Darstellung aus Figur 3 jedoch mit einem Kühlmittelzuführkanal 22, einer Kühlmitteldüse 23 und einem Absaugkanal 24. Die Kanäle 22, 24 weisen außen entsprechende Anschlüsse für Zuführung beziehungsweise Absaugung auf. Die Düse 23 richtet den Kühlmittelstrahl auf die stelle, an der die Abtragung stattfindet. Die Fließrichtung des Kühlmittels ist durch Pfeile veranschaulicht.

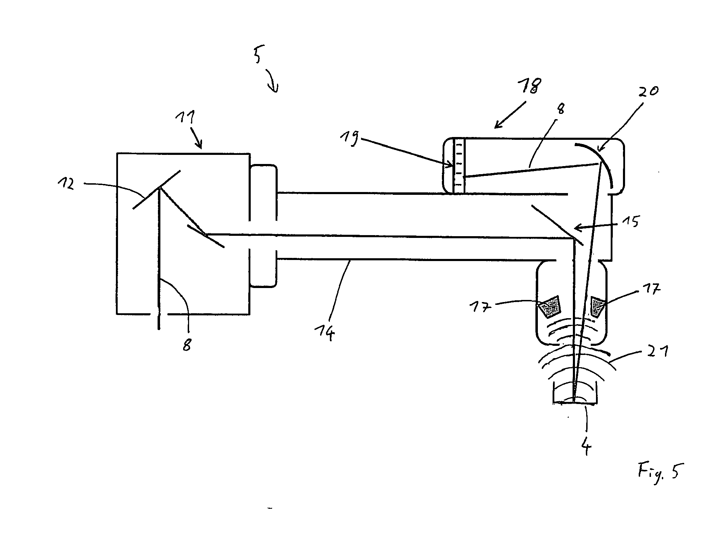

Figur 5 zeigt das Handstück 5. Dabei sind die Verbindungsmittel und die Zahnschiene nicht gezeigt. Der Laserstrahl 8 wird über den Scanner 11 und dessen Scannerspiegel 12 und über den Umlenkspiegel 15 in das Loch 4 eingekoppelt. Dort wird er teilweise reflektiert und anschließend über einen in einem zusätzlich montierten Triangulationsarm 18 angeordneten Triangulationsspiegel 20 auf ein CCD 19 umgelenkt. Über die Verschiebung des Laserstrahl 8 auf dem CCD 19 kann die Veränderung der Tiefe des Lochs 4 bestimmt werden. Dabei wird vorteilhafterweise ein Laserstrahl 8 eingesetzt, der nicht zu einer Ablation führt. Durch die Bewegung der Scannerspiegel 12 kann der Laserstrahl 8 im Loch 4 bewegt werden. Dadurch lässt sich die Tiefe bzw. die Veränderung der Tiefe des Lochs 4 an verschiedenen Stellen ermitteln. Wird die Energie des Laserstrahls 8 gesteigert, so dass es zu einer Ablation kommt, entsteht ein Ablationsknall 21, der durch Wellenfronten angedeutet ist. Dieser Ablationsknall 21 trifft auf die Mikrofone 17, die ihn erfassen. Dadurch können Aufschlüsse über die Struktur gewonnen werden, an der der Ablationsknall 21 entsteht. Ist darüber hinaus der Zeitpunkt bekannt, zu dem der Laserstrahl 8 im Loch 4 eintrifft bzw. das Handstück 5 passiert oder außerhalb des Handstücks 5 erzeugt wird, kann die Tiefe des Lochs 4 bzw. der Abstand des Bodens zu den Mikrofonen 17 bestimmt werden. Dabei ist die Kenntnis der genauen Zeit des Eintreffens am Grund des Lochs 4 nicht erforderlich, da die Laufzeit des Laserstrahls 8 im Verhältnis zur Laufzeit der akustischen Wellen des Ablationsknalls 21 vernachlässigbar gering ist.

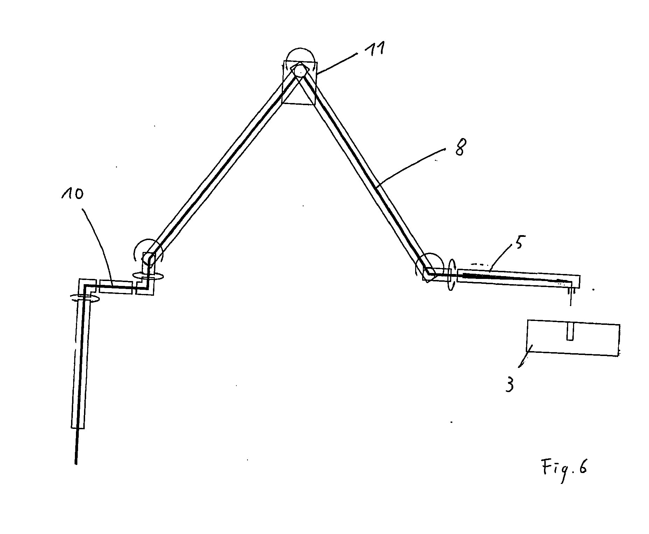

Figur 6 zeigt eine schematische Darstellung eines zweiten erfindungsgemäßen Systems, mit einem beweglichen Arm zur Führung des Laserstrahls 8. Der Arm weist teilweise Lichtleiter 10 auf. Im Arm ist ein Scanner 11 angeordnet. Der Arm ist an zahlreichen Stellen dreh und knickbar. Diese Freiheitsgerade sind durch Pfeile angedeutet. Am Arm angeschlossen ist ein Handstück 5 angeordnet. Ebenfalls gezeigt ist eine Zahnschiene 3.

Eine solche Ausführung mit beweglichem Arm ist für die praktische Anwendung im Mundraum mit zahlreichen Vorteilen verbunden.

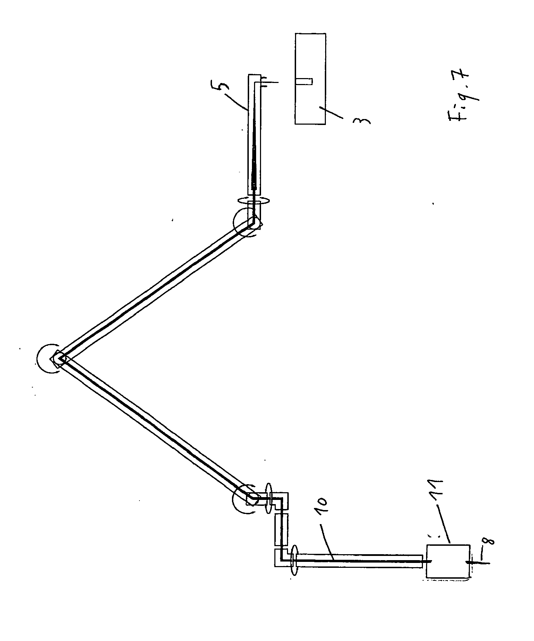

Figur 7 zeigt eine schematische Darstellung eines dritten erfindungsgemäßen Systems, ähnlich zu Figur 6, wobei ein Scanner 11 am Fuß des Arms angeordnet ist.

Weitere vorteilhafte Ausführungsformen lassen sich ggf. den entsprechenden Anforderungen angepasst durch den Fachmann leicht auffinden.

### Bezugszeichenliste:

- 1.: Kiefer
- 2.: Zahn
- 3.: Zahnschiene
- 4.: Loch
- 5.: Handstück
- 6.: Erstes Verbindungsmittel
- 7.: Zweites Verbindungsmittel
- 8.: Laserstrahl
- 9.: Laser
- 10.: Lichtleiter
- 11.: Scanner
- 12.: Scannerspiegel
- 13.: Bewegungsvorrichtung
- 14.: Endabschnitt
- 15.: Umlenkspiegel
- 16.: Einkopplungsabschnitt
- 17.: Mikrofon
- 18.: Triangulationsarm
- 19.: CCD
- 20.: Triangulationsspiegel
- 21.: Ablationsknall
- 22.: Kühlmittelzuführungskanal
- 23.: Kühlmitteldüse
- 24.: Absaugkanal

## Patentansprüche

1. System zum Abtragen von festem Material im Mundraum eines Menschen oder Tieres umfassend eine Festlegestruktur und eine Einbringungsvorrichtung (5, 9, 10, 11, 14, 16), wobei die Einbringungsvorrichtung mindestens ein Mittel (8, 9) zum berührungslosen Abtragen von festem Material aufweist und die Festlegevorrichtung (3) zum Festlegen an einem menschlichen oder tierischen Kopf, insbesondere Kiefer (1), eingerichtet ist, wobei die Festlegevorrichtung (3) ein erstes Verbindungsmittel (6) und die Einbringungsvorrichtung (5, 9, 10, 11, 14, 16) ein zweites Verbindungsmittel (7) aufweist, wobei die Verbindungsmittel (6, 7) so eingerichtet sind, dass das zweite Verbindungsmittel (7) steif mit der Festlegevorrichtung (3) verbindbar ist und Festlegevorrichtung (3) und Einbringungsvorrichtung (5, 9, 10, 11, 14, 16) so ausgebildet sind, dass das zweite Verbindungsmittel (7) nach dem steifem Verbinden mit der an dem Kopf festgelegten Festlegestruktur (3) eine relativ zu einem Kieferknochen (1) oder einem Zahn (2) des Menschen oder des Tieres fixierte Lage aufweist, **dadurch gekennzeichnet, dass** die Einbringungsvorrichtung (5, 9, 10, 11, 14, 16) eine Entfernungsmessungsvorrichtung (17, 18) zur Bestimmung des Abstandes zum abzutragenden Material umfasst.

2. System nach Anspruch 1, **dadurch gekennzeichnet, dass** die Entfernungsmessungsvorrichtung Mittel, insbesondere mindestens ein Mikrofon (17), zur Erfassung eines Ablationsknalls umfasst.

3. System nach einem der vorstehenden Ansprüche, wobei die Entfernungsmessvorrichtung Mittel zur Durchführung einer Laser-Triangulation umfasst.

4. System nach einem der vorstehenden Ansprüche, wobei die fixierte Lage eine durch die Festlegevorrichtung (3) und die Verbindungsmittel (6, 7) vorbestimmte Lage ist.

5. System nach einem der vorstehenden Ansprüche, wobei die Festlegevorrichtung (3) eine Zahn- und/oder Kieferschiene zum Aufklemmen auf einen Kieferabschnitt (1) und/oder Zähne (2) und/oder Implantate umfasst.

6. System nach einem der vorstehenden Ansprüche, wobei das mindestens eine Mittel zum Abtragen einen gepulster Laser (9) oder einen Lichtleiter (10) verbunden mit einem gepulsten Laser (9) umfasst.

7. System nach dem vorstehenden Anspruch, **dadurch gekennzeichnet, dass** die Einbringungsvorrichtung einen Scanner (11) zur Ablenkung des mindestens einen Mittels (8, 9) zum berührungslosen Abtragen umfasst

8. System nach Anspruch 7, **dadurch gekennzeichnet, dass** der Scanner (11) mindestens einen an einer Bewegungsvorrichtung (13) befestigten Scannerspiegel (12) zur steuerbaren Ablenkung eines Laserstrahls (8) umfasst.

9. System nach Anspruch 8, **dadurch gekennzeichnet, dass** die Bewegungsvorrichtung (13) steif mit dem zweiten Verbindungsmittel (7) verbunden ist.

10. System nach einem der vorstehenden Ansprüche zum Einbringen mindestens eines, insbesondere eckigen, Lochs (4) in einen Kieferknochen (1), insbesondere zum Einbringen einer Befestigungsstruktur für ein Implantat in einen Kieferknochen (1).

11. System nach einem der vorstehenden Ansprüche 1 bis 9, eingerichtet zum Einbringen eines Lochs (4) oder einer Ausnehmung in einen Zahn (2).

12. System nach einem der vorstehenden Ansprüche 1 bis 9, eingerichtet zum Abtragen von Kieferknochen (1) im direkten Umfeld eines Zahns (2) zur Beeinflussung der Bewegung des Zahns (2) im Kiefer (1).

## Claims

1. System for ablating solid material in the oral cavity of a human or animal comprising a fixation device and an insertion device (5, 9, 10, 11, 14, 16), wherein the insertion device includes at least one means (8, 9) for touchless ablation of solid material and the fixation device (3) is set up for being fixed in place on a human or animal head, in particular a jaw (1), wherein the fixation device (3) includes a first connecting means (6) and the insertion device (5, 9, 10, 11, 14, 16) includes a second connecting means (7), wherein the connecting means (6, 7) are set up such that the second connecting means (7) is rigidly connectable to the fixation device (3), and fixation device (3) and insertion device (5, 9, 10, 11, 14, 16) are configured such that the second connecting means (7), following the rigid connection to the fixation device (3) that is fixed on the head, is in a fixed position relative to a jaw bone (1) or a tooth (2) of the human or animal, **characterized in that** the insertion device (5, 9, 10, 11, 14, 16) comprises a distance-measuring device (17, 18) for determining the distance to the material to be ablated.

2. System according to claim 1, **characterized in that** the distance-measuring device comprises means, in particular at least one microphone (17), for detecting an ablation noise.

3. System according to one of the preceding claims, wherein the distance-measuring device comprises means for performing a laser triangulation.

4. System according to any of the preceding claims, wherein the fixed position is a position that is predetermined by the fixation device (3) and the connecting means (6, 7).

5. System according to one of the preceding claims, wherein the fixation device (3) comprises a dental and/or jaw splint for clamping upon a jaw portion (1) and/or teeth (2) and/or implants.

6. System according to one of the preceding claims, wherein the at least one means for ablation comprises a pulsed laser (9) or a light guide (10) that is connected to a pulsed laser (9).

7. System according to the preceding claim, **characterized in that** the insertion device comprises a scanner (11) for deflecting the at least one means (8, 9) for touchless ablation.

8. System according to claim 7, **characterized in that** the scanner (11) comprises at least one scanner mirror (12) that is fastened to a motion device (13) for controllable deflection of the laser beam (8).

9. System according to claim 8, **characterized in that** the motion device (13) is rigidly connected to the second connecting means (7).

10. System according to any one of the preceding claims for incorporating at least one, particularly an angled, hole (4) in a jaw bone (1), in particular for inserting a fastening structure for an implant in the jaw bone (1).

11. System according to one of the preceding claims 1 to 9, set up for incorporating a hole (4) or a recess into a tooth (2).

12. System according to one of the preceding claims 1 to 9, set up for ablating jaw bone (1) in the direct vicinity of a tooth (2) for influencing the movement of the tooth (2) inside the jaw (1).

## Revendications

1. Système destiné à enlever de la matière solide dans la cavité buccale d'un être humain ou d'un animal, comprenant une structure d'immobilisation et un dispositif d'introduction (5, 9, 10, 11, 14, 16), le dispositif d'introduction comportant au moins un moyen (8, 9) destiné à l'enlèvement sans contact de matière solide, et le dispositif d'immobilisation (3) étant conçu pour effectuer une immobilisation sur une tête humaine ou animale, notamment sur des mâchoires (1), le dispositif d'immobilisation (3) comportant un premier moyen de liaison (6), et le dispositif d'introduction (5, 9, 10, 11, 14, 16) comportant un deuxième moyen de liaison (7), les moyens de liaison (6, 7) étant conçus tels que le deuxième moyen de liaison (7) peut être relié de manière rigide au dispositif d'immobilisation (3), et le dispositif d'immobilisation (3) et le dispositif d'introduction (5, 9, 10, 11, 14, 16) étant réalisés tels que le deuxième moyen de liaison (7) présente, après l'établissement de sa liaison rigide avec la structure d'immobilisation (3) immobilisée sur ladite tête, une position fixe par rapport à un os de mâchoire (1) ou à une dent (2) dudit être humain ou dudit animal, **caractérisé en ce que** le dispositif d'introduction (5, 9, 10, 11, 14, 16) comprend un dispositif de mesure de distance (17, 18) destiné à déterminer la distance par rapport à la matière à enlever.

2. Système selon la revendication 1, **caractérisé en ce que** le dispositif de mesure de distance comprend des moyens permettant de détecter un claquement d'ablation, s'agissant notamment d'au moins un microphone (17).

3. Système selon l'une des revendications précédentes, le dispositif de mesure de distance comprenant des moyens permettant de réaliser une triangulation laser.

4. Système selon l'une des revendications précédentes, ladite position fixe étant une position prédéfinie par le dispositif d'immobilisation (3) et les moyens de liaison (6, 7).

5. Système selon l'une des revendications précédentes, le dispositif d'immobilisation (3) comprenant une gouttière pour dents et/ou mâchoires laquelle est destinée à être clipsée sur une partie des mâchoires (1) et/ou sur des dents (2) et/ou sur des implants.

6. Système selon l'une des revendications précédentes, l'au moins un moyen destiné à l'enlèvement comprenant un laser impulsionnel (9) ou un conducteur de lumière (10) relié à un laser impulsionnel (9).

7. Système selon la revendication précédente, **caractérisé en ce que** le dispositif d'introduction comprend un scanner (11) permettant d'orienter l'au moins un moyen (8, 9) destiné à l'enlèvement sans contact.

8. Système selon la revendication 7, **caractérisé en ce que** ledit scanner (11) comprend au moins un miroir de scanner (12) qui est fixé sur un dispositif de déplacement (13) et qui permet une orientation contrôlée d'un faisceau laser (8).

9. Système selon la revendication 8, **caractérisé en ce que** le dispositif de déplacement (13) est relié de manière rigide au deuxième moyen de liaison (7).

10. Système selon l'une des revendications précédentes, destiné à pratiquer au moins un trou (4), notamment de forme polygonale, dans un os de mâchoire (1), permettant ainsi d'introduire dans l'os de mâchoire (1) notamment une structure de fixation destinée à un implant.

11. Système selon l'une des revendications 1 à 9 précédentes, conçu pour pratiquer un trou (4) ou un évidement dans une dent (2).

12. Système selon l'une des revendications 1 à 9 précédentes, conçu pour enlever de l'os de mâchoire (1) dans l'environnement immédiat d'une dent (2), pour ainsi influencer le déplacement de la dent (2) au sein de la mâchoire (1).
